# EUROPEAN PATENT SPECIFICATION

(11) **EP 4 395 944 B1**
(45) Date of publication and mention of the grant of the patent: **21.10.2026**
(21) Application number: 22790584.1
(22) Date of filing: 23.08.2022
(51) Int. Cl.: B09B 3/00

(54) **USE OF A COMPOSITE MATERIAL FOR REDUCING CARBON EMISSION, MATERIAL AND METHOD**
VERWENDUNG EINES VERBUNDMATERIALS ZUR REDUZIERUNG VON KOHLENSTOFFEMISSION, MATERIAL UND VERFAHREN
UTILISATION D'UN MATÉRIAU COMPOSITE POUR LA RÉDUCTION DES ÉMISSIONS DE CARBONE, MATÉRIAU ET PROCÉDÉ

(30) Priority: 31.08.2021 IL 28599321
(43) Date of publication of application: 10.07.2024
(73) Proprietor: U.B.Q. Materials Ltd., Tel Aviv, 6492108 (IL)
(72) Inventor: BIGIO, Jack (Tato), 6901425 Tel Aviv (IL); FELUS, Gil, 8514200 Kibbutz Kfar Gaza (IL); STAHL, Gad, 8514200 Kibbutz Kfar Gaza (IL)
(74) Representative: Grünecker Patent- und Rechtsanwälte PartG mbB
(86) International application number: PCT/IL2022/050921
(87) International publication number: WO 2023/031912

(56) References cited:
- WO-A2-2010/082202

## Description

### TECHNOLOGICAL FIELD

The present disclosure relates to greenhouse gases and carbon emission and to products and method for reducing the same.

### BACKGROUND ART

References considered to be relevant as background to the presently disclosed subject matter are listed below:
- International Patent Application Publication No. WO 2010/082202 A3

Acknowledgement of the above references herein is not to be inferred as meaning that these are in any way relevant to the patentability of the presently disclosed subject matter.

### BACKGROUND

WO 2010/082202 A2 describes a composite material having thermoplastic properties and comprising organic matter and optionally one or both of inorganic matter and plastic matter. Such a composite material may be prepared from waste such as domestic waste. For preparation of the composite material, waste is dried and particulated. The dried and particulated waste material is then heated, while mixing under shear forces. The composite material is processed to obtain useful articles.

### GENERAL DESCRIPTION

In accordance with a first aspect of the presently disclosed subject matter there is provided a use of a composite material for reducing carbon emission, the composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;
wherein said composite material comprises less than 5wt% polyethylene terephthalate (PET) out of the total weight of the composite material; and
wherein said composite has a carbon footprint of below about -10KgCO₂ eq/Kg as determined according to ISO14040: 2006.

In accordance with a second aspect of the presently disclosed subject matter there is provided an article of manufacture comprising a combination of one or more thermoplastic synthetic polymers and a composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;wherein said composite material comprises less than 5wt% polyethylene terephthalate PET out of the total weight of the composite material; and wherein said composite has a carbon footprint of below about - 10KgCO₂ eq/Kg as determined according to ISO14040: 2006 , the article of manufacture exhibiting a carbon footprint that is lower than the total carbon footprint of the one or more synthetic polymers.

Further, in accordance with a third aspect of the presently disclosed subject matter there is provided a method of producing an article of manufacture, the method comprises the use of a composite material for reducing carbon emission, the composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;
wherein said composite material comprises less than 5wt% polyethylene terephthalate (PET) out of the total weight of the composite material; and
wherein said composite has a carbon footprint of below about -10KgCO₂ eq/Kg as determined according to ISO14040: 2006;
wherein the method comprises forming a molten of one or more synthetic polymers and the composite material and shaping the molten into the shape of the article of manufacture.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

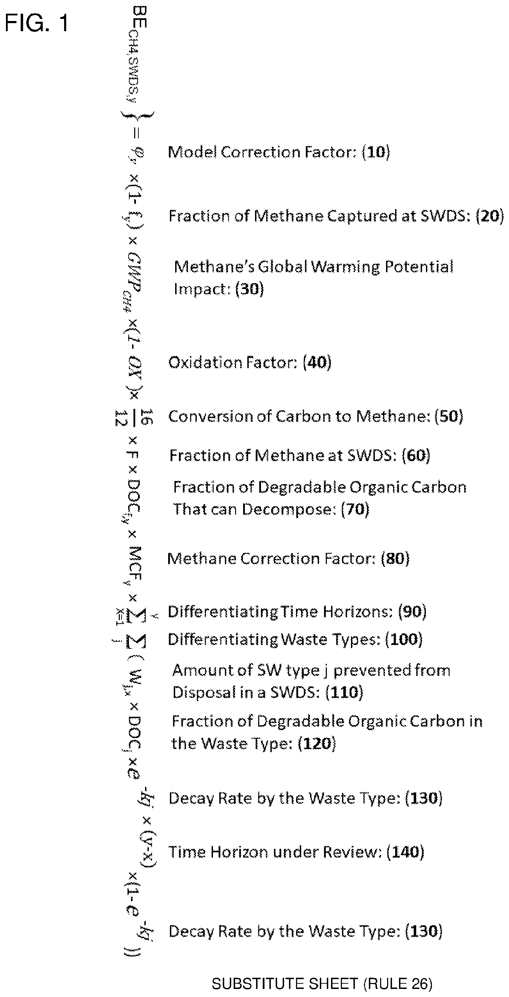

**Figure 1** provides the equation for the First Order Decay (FOD) method for calculating avoided emissions, including the following parameters: model correction factor (" 10"), Fraction of Methane Captured at Solid Waste Disposal Site (SWDS) ("20"), Methane's Global Warming Potential Impact ("30"), Oxidation Factor ("40"), Conversion of Carbon to Methane ("50"), Fraction of Methane at SWDS ("60"), Fraction of Degradable Organic Carbon that can Decompose ("70"), Methane Correction Factor ("80"), Differentiating Time Horizons ("90"), Differentiating Waste Types ("100"), Amount of Solid Waste (SW) type j prevented from disposal at a SWDS ("110"), Fraction of Degradable Organic Carbon in the Waste Type ("120"), Decay Rate by the Waste Type ("130"), Time Horizon under Review ("140").

### DETAILED DESCRIPTION

Producing useable composite materials from heterogeneous waste faces many challenges. Yet, the amount of waste being created, every day, around the world calls for recreating new useful materials therefrom. As such, organic waste, and in particular, food waste management needs to be listed as a top priority by local, regional, national and international governments.

The presently disclosed subject matter is based on the development of a composite material that has a negative carbon footprint, and thus can be used as a *"diluent"* for synthetic polymers (plastics) which have a positive carbon footprint and thus are considered unfavorable to the environment and to the greenhouse effect.

Specifically, and in accordance with its broadest aspect, the presently disclosed subject matter provides a composite material, preferably for use in reducing carbon emission (e.g. for use in reducing greenhouse carbon emission).

The composite material disclosed herein comprises (i) at least 40wt% of non-plastic heterogenous organic matter out of a total weight of the composite material, said heterogenous organic matter comprising at least cellulose (ii) a plurality of synthetic polymers and (iii) up to 15wt% inorganic matter;
wherein the composite material comprises less than 5wt% polyethylene terephthalate PET, preferably less than 4wt% or even equal or less than 3wt%, out of the total weight of the composite material; and
wherein the composite has a carbon footprint of below about -10KgCO₂ eq/Kg as determined according to ISO14040: 2006.

In the context of the present disclosure, when referring to a *"composite material"* it is to be understood as an essentially evenly distributed blend of two or more constituent materials which are different in their chemical and/or physical properties and yet are merged/combined together to create a material which properties are unlike the individual materials forming it.

The presently disclosed composite material comprises non-plastic/non-synthetic heterogenous organic matter.

When referring to heterogenous (non-plastic/non-synthetic) organic matter, it is to be understood to encompass a mixture of different nature-derived matter, which may originate from plant waste, waste from plant derived products, animal debris, waste from animal-based food etc.

In some examples, the organic matter comprises heterogenous blend of cellulosebased material. This includes any combination of lignocellulose, cellulose, lignin and/or hemicellulose biomass and any derivative or modified forms thereof. In the following, the term *"cellulose"* collectively refers to any one or combination of lignocellulose, cellulose, lignin and hemicellulose and derivatives or modifications thereof.

Cellulose content can be determined by TG-DSC conducted according to ISO11358 (weight loss >5%), under the conditions described below.

In some examples of the presently disclosed subject matter, the amount of the non-plastic heterogenous organic matter within the composite material is determined according to ISP11358 to be at least 40wt%; at times, at least 45wt%; at times, at least 50wt%; at times, at least 55wt%; at times, at least 60wt%; at times, at least 65wt%; at times, at least 70wt%; at times, at least 75wt%; at times, at least 80wt%; at times, at least 85wt%; at times, at least 90wt%.

The composite material of the presently disclosed subject matter can also be characterized by the presence of DNA matter (as part of the organic matter) as detected using chloroform:isoamyl alcohol (24:1) (CTAB) solution in a conventional DNA extraction protocol, such as that described by Yi, S., Jin, W., Yuan, Y. and Fang, Y. (2018). An Optimized CTAB Method for Genomic DNA Extraction from Freshly-picked Pinnae of Fern, Adiantum capillus-veneris L. Bio-protocol 8(13): e2906. DOI: 10.21769/BioProtoc2906 (see also the Examples, which form an integral part of the present disclosure).

In some examples of the presently disclosed subject matter, the amount of DNA within the composite material is at least 0.1mg/g; at times, at least 0.5mg/g; at times, at least 1mg/g; at times, at least 2 mg/g; at times, at least 3mg/g; at times, at least 4mg/g; at times, at least 5mg/g; at times, at least 6mg/g; at times, at least 7mg/g; at times, at least 8mg/g; at times, at least 9mg/g; at times, at least 10mg/g; at times, at least 11mg/g; at times, at least 12mg/g; at times, at least 13mg/g; at times, at least 14mg/g; at times, at least 15mg/g.

In some examples of the presently disclosed subject matter, particularly when the composite material is essentially plastic free (as further described hereinbelow), the amount of DNA is at least 10mg/g, or even at least 15mg/g.

The composite material of the of the presently disclosed subject matter can also be characterized by the presence of chlorophyll (also part of the organic matter), as detected using conventional protocols.

In some examples, chlorophyl content is determined by adding to a sample of the composite material of the presently disclosed subject matter 1 ml of dimethylformamide (DMF, in 1.5ml tubes). The tubes are incubated overnight at 4°C to allow the chlorophyll to dissolve into the DMF solution. A sample solution (300µl) is mixed with 600µl of DMF in a fresh Eppendorf tube (2 volumes of DMF per volume of sample). The absorbance (A) is taken in a spectrophotometer at 647 nm and 664.5 nm wavelengths using a Quartz cuvette. The chlorophyll content is calculated using the relations: $Chlorophyll a content \left(μg/ml\right) = \left(12\times A664.5\right) - \left(2.79\times A647\right)$ $Chlorophyll b content \left(μg/ml\right) = \left(20.78\times A647\right) - \left(4.88\times A664.5\right)$

In some examples, the amount of chlorophyl in the composite material of the presently disclosed subject matter is at least 95µg/g.

In some examples, the presently disclosed composite material is essentially synthetic free, i.e. comprising up to 10wt% synthetic polymers (synthetic plastics). Such composite material is referred to herein, at times, by the term *"organic composite"*

In some examples, the presently disclosed subject matter comprises more than 10wt% synthetic polymers. The term *"synthetic polymers"* or in brief *"synthetic plastics"* is to be understood to refer to a mixture of plastics typically present in domestic and/or industrial waste, yet also any other synthetic plastics known in the art.

In accordance with some examples of the presently disclosed subject matter, the *organic composite* is a composite material of the presently disclosed subject matter that comprises less than 9wt% synthetic polymers, at times, less than 8wt% synthetic polymers; at times, less than 7wt% synthetic polymers; at times, less than 6wt% synthetic polymers; at times, less than 5wt% synthetic polymers; at times, less than 4wt% synthetic polymers; at times, less than 3wt% synthetic polymers; at times less than 2wt% synthetic polymers; at times, less than 1wt% synthetic polymers; at times, no detectable amount of synthetic polymers.

In some examples, the presently disclosed organic composite material comprises at most 3wt% synthetic polymers.

In some examples, the presently disclosed composite material has no detectable amounts of synthetic polymers, when examined using the herein described TG-DSC analysis conditions (TG-DSC conducted according to ISO11358 (weight loss >5%), under the conditions described below).

In some alternative examples, the composite material comprises more than 10wt% synthetic polymers yet in an amount of between 10wt% and 40wt% out of a total weight of the composite material. The composite material disclosed herein that comprises more than 10wt% synthetic polymers but up to 40wt% is referred to herein by the terms *"Plastic-less Composite".*

In the above and below description of the presently disclosed subject matter, the term *"composite material"* refers collectively to the *Organic Composite* and the *Plastic-Less Composite* as well as to other types of composite material that fall under the scope of the presently disclosed subject matter.

In some examples of the presently disclosed subject matter, the *plastic-less* composite material comprises synthetic polymers in an amount of up to 35wt%; at times, in an amount of up to 30wt%; at times, in an amount of up to 25wt%; at times, in an amount of up to 20wt%; at times, in an amount of up to 15wt%; at times, in an amount of between 10wt% and 135wt%; at times, in an amount of between 10wt% and 30wt%; at times, in an amount of between 10wt% and 20wt%.

The synthetic polymers present in the presently disclosed composite material (be it the organic or the plastic-less) can include one or more polyolefins. When referring to polyolefins it includes, without being limited thereto, high density polyethylene (HDPE), low density polyethylene (LDPE), polypropylene (PP) and any combination of same.

In some examples of the presently disclosed subject matter, the synthetic polymers include one or more polyacrylonitriles.

In some examples of the presently disclosed subject matter, the synthetic polymers include one or more polybutadienes.

In some examples of the presently disclosed subject matter, the synthetic polymers include one or more polycarbonates.

In some examples of the presently disclosed subject matter, the synthetic polymers include one or more polyamides (PA).

In some examples of the presently disclosed subject matter, the synthetic polymers include one or more ethylene vinyl alcohol copolymers (EVOH).

In some examples of the presently disclosed subject matter, the synthetic polymers include one or more polyurethane (PU).

In the context of the present disclosure, when the synthetic polymers include PET, the amount thereof is less than 5wt% out of the total weight of the composite material, or even less than 4wt%, or even less than 3wt%, or even less than 2wt% or even less than 1wt%, as further discussed hereinabove and below.

In some examples, the synthetic polymers include one or more thermosets, e.g. vulcanized rubber, thermoplastic polymers vulcanized (TPV) and/or polyurethanes (PU).

It is to be understood that when referring herein to *"less than"* it means some defined amount but also non-detectable amount, as determined by the appropriate method of measurement relevant to the component under analysis. For example, if the term refers to synthetic polymers, an amount of less than 5wt% means also non-detectable amount as determined using TG-DSC analysis conducted according to ISO11358 (weight loss >5%).

In some examples of the presently disclosed subject matter, the composite material comprises also inorganics. The amount of inorganic matter, if present in the composite material, can be determined using TG-DSC analysis under the conditions known in the art, Inductively Coupled Plasma Atomic Emission spectroscopy (ICP - AES) or as described herein (e.g. in the Examples section).

In some examples of the presently disclosed subject matter, the inorganic matter present in the composite material is in an amount of up to about 15wt%; at times in an amount of up to about 10wt%; at times in an amount of up to 5wt%; at times in an amount of up to about 4wt%, 3wt%, 2wt% or even up to 1wt% out of the total weight of the composite material, as determined using TG-DSC analysis or Inductively Coupled Plasma Atomic Emission spectroscopy (ICP - AES).

In some examples of the presently disclosed subject matter, the amount of inorganic matter can be within any range between the above recited lower and upper limits. For example, the inorganic matter can be in any range within the range of between about 1wt% and 15wt%, e.g. between about 5wt% and 10wt%, or between about 1wt% and 10wt%, or between about 3wt% and 8wt% etc.

In some examples, the inorganic matter within the composite material of the presently disclosed subject matter refers to material that typically exists in municipal, household and/or industrial waste. This includes, without being limited thereto, sand, stones, glass, ceramics and other minerals, as well as metals, including e.g. aluminum, iron, copper.

In some examples of the presently disclosed subject matter, the inorganic matter comprises silicates. When silica is present, the amount thereof is at most 10mg/g. In some examples, the silica amount in the composite material is at most 7mg/g, at times at most 6mg/g, at times at most 5mg/g, at times at most 4mg/g, at times at most 3mg/g, at times at most 2mg/g, at times at most 1mg/g.

In some examples of the presently disclosed subject matter, the amount of silicates as well as other inorganic elements, can be determined using argon plasma, in a technology of Inductively Coupled Plasma Atomic Emission spectroscopy (ICP - AES), the details of which are provided hereinbelow in the Examples, which form an integral part of the present disclosure, in an amount further discussed below.

The composite material is characterized by a carbon footprint of below about -10KgCO₂ eq/Kg as determined according to the life cycle assessment (LCA) of ISO14040: 2006.

In the context of the presently disclosed subject matter, the term *"carbon footprint"* is used to denote the amount of carbon dioxide (CO₂) or CO₂ equivalent emitted from the composite material.

In the context of the presently disclosed subject matter, the term *"carbon offset"* or *"carbon offsetting"* is used to denote an action or process of compensating for carbon dioxide emissions by making equivalent reductions of carbon dioxide in the atmosphere.

In the context of the presently disclosed subject matter, the determination of the carbon footprint makes use of the UN Clean Development Mechanism (CDM) Methodology Tool 4 (V. 8.0, details of which are found at https://cdm.unfccc.int/Reference/tools/index.html) and the consolidated methodology for alternative waste treatment processes (ACM0022, details of which are found at https//cdm.unfccc.int/methodologies/DB/YINQ0W7SUYOO2S6GU8E5DYVP2ZC2N 3). Notably, the CDM mechanism is applicable in all markets, including the European Union, United Kingdom, USA, and Israel.

Tool 4 concerns emissions from solid waste disposal sites (SWDS). The baseline scenario assumed (in the absence of employing a waste management/recycling facility) is the disposal of municipal solid waste (MSW) in a partially managed landfill. Landfills create anaerobic conditions, under which organic waste produces methane as it decomposes. As appreciated, methane is a very potent greenhouse gas (GHG) with a global warming potential (GWP) 86 times higher than carbon dioxide (CO₂) when considered on a timeline of 20 years (GWP₂₀), or 34 times higher on a 100-year time horizon (GWP₁₀₀) (See in this connection also https://www.ipcc.ch/site/assets/uploads/2018/02/WG1AR5_Chapter08_FINAL.pdf, p. 714, Table 8.7.). The composite material disclosed here, provides a solution for an eminent need by diverting organic waste, inter alia, from landfills and converting it to a product that prevents this generation of methane.

In the context of the presently disclosed subject matter, the determination of avoided emissions can be determined by the first-order decay method (FOD), which includes the following parameters:
- Fraction of methane in the SWDS gas
- Fraction of methane captured at the SWDS
- Amount of methane oxidized by the SWDS covering
- Methane correction factor
- Model correction factor to account for model uncertainties
- Amount of each type of waste treated
- Fraction of degradable organic carbon (DOC)
- Decay rate for each type of waste

The FOD equation is given in Figure 1.

The central values used for the FOD parameters are shown in Tables 1A and 1B.

**Table 1A: Assumptions for model parameters**

| **Parameter** | **Description** | **Central Value** |
|---|---|---|
| **ϕ** | Model correction factor to account for model uncertainties | 1.00 |
| **f** | Fraction of methane captured at the SWDS | 0.00 |
| **OX** | Oxidation factor 0.00 | 0.00 |
| **F** | Fraction of methane in the SWDS gas | 0.55 |
| **DOC_{f}** | Fraction of degradable organic carbon (DOC) that can decompose after 100 years in a landfill | 0.68* |
| **MCF** | Methane correction factor 0.9 | 0.9 |

| | | |
|---|---|---|
| * The weighted average of the MSW component specific DOC_{f} in the baseline scenario is used for the calculation | | |

**Table 1B: 2006 IPCC default values for Degradable organic carbon (DOC) and decay rate (k) per waste type**

| | **MSW Components** | | | | | |
|---|---|---|---|---|---|---|
| | Food Waste | Plastic | Cardboard | Paper | Diapers | Garden Waste |
| **DOCⱼ (%) in Dry Waste*** | 45% | 0% | 44% | 44% | 30% | 55% |
| **Decay Rate (k)**** | 10% | 0% | 6% | 6% | 10% | 8% |

| | | | | | | |
|---|---|---|---|---|---|---|
| * DOCⱼ values are adapted from the default values for different waste types given in the 2006 IPCC Guidelines for National GHG Inventories ** Values are default values from the 2006 IPCC Guidelines for National GHG Inventories. | | | | | | |

When considering the determination of carbon footprint, the following definition of terms should be taken into consideration:
**Anaerobic decomposition** - Decomposition in the absence of oxygen. Organic waste produces CO₂ when it decomposes in the presence of oxygen but the more potent GHG methane in anaerobic conditions ( https://www.epa.gov/lmop/basic-information-about-landfill-gas).
**Baseline scenario** - The situation that would occur in the absence of a proposed project or activity (a.k.a. "business as usual", https://cdm.unfccc.int/Reference/Guidclarif/glos_CDM.pdf).
**Carbon dioxide (CO₂)** - The most abundant greenhouse gas (GHG) on earth. Carbon dioxide occurs naturally but is also released by many human activities, including transportation, energy generation, and industrial processes. Measured in parts per million (ppm) (https://www.epa.gov/ghgemissions/overview-greenhouse-gases#carbon-dioxide).
**Carbon dioxide equivalent (CO₂eq)** - A measure used to express the global warming potential (GWP) of other GHGs, as well as the carbon footprint of processes, activities, or products, in terms of CO₂ (https://ec.europa.eu/eurostat/statistics-explained/index.php/Glossary:Carbon_dioxide_equivalent)
**Carbon footprint** - A Life Cycle Assessment (LCA) focusing solely on the climate change impact category to measure carbon emissions caused during a product's lifetime or by an organization's activities (the relevant ISO standard is 14067, (https://www.iso.org/standard/71206.html)
**Carbon-negative** - A carbon-negative product, process, or organization must sequester or prevent more carbon emissions than it generates. As further discussed below, the composite material disclosed herein is a carbon-negative (a.k.a. "climate-positive") product (https://www.vox.com/the-goods/2020/3/5/21155020/companies-carbon-neutral-climate-positive).
**Climate-positive** - A climate-positive product, process, or organization must sequester or prevent more carbon emissions than it generates. As detailed herein, the composite material disclosed herein is a climate-positive (a.k.a. "carbon-negative") product.
**Clean Development Mechanism (CDM)** - A methodology defined in the Kyoto Protocol to provide for projects that reduce GHG emissions and generate Certified Emission Reduction units (CERs), which may be traded in emissions trading schemes (https://cdm.unfccc.int/). As described hereinabove and below, this CDM methodology can and was used to calculate avoided emissions for the Life Cycle Assessment (LCA) of the composite material disclosed herein.
**Cradle-to-gate** - A cradle-to-gate LCA considers carbon emissions from the extraction stage through the production process, until the product leaves the manufacturer or factory gate. This includes transportation to the factory but not to the customer (https://circularecology.com/glossary-of-terms-and-definitions.html#.X-Ir1C-ZPOQ).
**End of life (EOL)** - Refers to the disposal stage of a product's life cycle. Common EOL options include landfill, chemical and mechanical recycling, composting, and incineration (https://www.wur.nl/en/article/Waste-stage-end-of-life-options-1.htm).
**Greenhouse gas (GHG)** - A gas that has the potential to capture heat by preventing radiation from leaving the earth's atmosphere, causing the greenhouse effect. Carbon dioxide (CO₂), methane (CH₄), and water vapor are the most important GHGs, along with surface-level ozone, nitrous oxides, and fluorinated gases to a lesser extent (https://www.epa.gov/ghgemissions/overview-greenhouse-gases)
**Global warming potential (GWP)** - The ability of a GHG to trap radiation and cause heating. The GWP of all GHGs is based on that of CO₂ and expressed as CO₂ CO₂eq. Because different gases have different lifespans, the GWP of a gas depends on the amount of time analyzed. A gas with a short lifespan relative to CO₂ will have a larger GWP with a shorter time horizon, as the effect will start to lessen once the gas breaks down in the atmosphere (https://www.ipce.ch/site/assets/uploads/2018/02/WG1AR5_Chapter08_FINAL.pdf).
**GWP₂₀** - GWP on a 20-year time horizon, where methane is 86 times more potent than CO₂ (https://www.ipcc.ch/site/assets/uploads/2018/02/WG1AR5 Chapter08 FINAL.pdf).
**GWP₁₀₀** - GWP on a 100-year time horizon, where methane is 34 times more potent than CO₂ (https://www.ipcc.ch/site/assets/uploads/2018/02/WG1AR5 Chapter08 FINAL.pdf).
**Kyoto Protocol** - An agreement adopted in 1997 and entered into force in 2005 that sets binding emission reduction targets. Established flexible market mechanisms such as CDM based on the trade of emissions permits.
**Life cycle assessment (LCA)** - A quantitative analysis of the environmental impacts of a product, process, or organization. The impact categories (e.g., carbon emissions or water use) and the boundaries of the system (e.g., cradle-to-gate) can vary depending on the goal of the assessment, but they should be transparently stated. Relevant ISO standards are 14040 and 14044 (https://pre-sustainability.com/legacy/download/Life-Cycle-Based-Sustainability-Standards-Guidelines.pdf).
**System boundary** - Describes the extent to which the activities associated with a product, process, or organization are considered in an LCA. Boundaries may consider stages of production, geographical areas, and timespans (https://ec.europa.eu/environment/life/project/Projects/index.cfm?fuseaction=home.sho wFile&rep=file&fil=ECOIL_Life_Cycle.pdf).

Based on the above, it has been determined that the presently disclosed composite material has a carbon footprint of not more than-10KgCO₂ eq/Kg, at times, not more than -11KgCO₂ eq/Kg. In some examples, the composite material has a carbon footprint of not more than -12KgCO₂ eq/Kg. In some examples, the composite material has a carbon footprint of not more than -13KgCO₂ eq/Kg. In some examples, the composite material has a carbon footprint of not more than -14KgCO₂ eq/Kg. In some examples, the composite material has a carbon footprint of not more than -15KgCO₂ eq/Kg. In some examples, the composite material has a carbon footprint of not more than -16KgCO₂ eq/Kg. In some examples, the composite material has a carbon footprint of not more than -17KgCO₂ eq/Kg. In some examples, the composite material has a carbon footprint of not more than -18KgCO₂ eq/Kg.

In some examples of the presently disclosed subject matter, when the composite material is the *organic composite,* i.e. comprising up to 10wt% plastics or even essentially free of plastics, the carbon footprint thereof is not more than -11KgCO₂ eq/Kg; at times, not more than -15 KgCO₂ eq/Kg; at times, not more than -18 KgCO₂ eq/Kg.

In some examples of the presently disclosed subject matter, when the composite material is a *plastic-less composite,* i.e. comprises between 10wt% and 40wt% plastics, and the carbon footprint thereof is not more than -10KgCO₂ eq/Kg; at times, not more than -11 KgCO₂ eq/Kg; at times, not more than -11.5 KgCO₂ eq/Kg

The composite material can be combined with externally added synthetic polymers, e.g. virgin plastics, as further described below. Notably, in cases that the composite material is combined with virgin plastic polymer, such as polypropylene (PP) or polylactic acid (PLA), the composite material significantly reduces the carbon footprint of the synthetic polymer to below the carbon footprint of the synthetic polymer in the absence of the presently disclosed composite material. This is evident from the non-limiting examples presented in **Tables 3A and 4,** showing the carbon footprint of organic (essentially plastic free) composite material. Further, **Table 4** shows that when the organic/plastic free composite material was compounded with 70% synthetic polymer, such as PP or PLA, the carbon footprint of these two polymers was reduced from 2.7 KgCO₂ eq/Kg to -3.3 KgCO₂ eq/Kg, and from 3.8 KgCO₂ eq/Kg to -2.6 KgCO₂ eq/Kg, respectively.

In some examples of the presently disclosed subject matter, the composite material has a weight loss onset temperature in a Thermogravimetric analysis (TGA) curve of not more than 220°C. When the composite material is essentially plastic free, the weight loss onset temperature is not more than 180°C.

In some examples of the presently disclosed subject matter, the composite material can be characterized by its physical properties on a sample thereof that has been subjected to injection molding with 70wt% polypropylene (PP).

In some examples of the presently disclosed subject matter, the injection molding specimen is characterized by a tensile modulus (according to ISO-527-2) of at least at least 1,000MPa; at times, of at least 1,100MPa; at times, of at least 1,200MPa. In some examples, the tensile modulus is within a range of 1,000MPa and 1,400MPa.

In some examples of the presently disclosed subject matter, the injection molding specimen is characterized by a tensile stress at yield (according to ISO-527-2) of at least 12 MPa; at times, of at least 13 MPa; at times, at least 13.5MPa.

In some examples of the presently disclosed subject matter, the injection molding specimen is characterized by a tensile strain at yield (according to ISO-527-2) of at least 2.2%; at times of at least 2.3%; at times, of at least 2.4%; at times, of at least 2.5%; at times, of at least 2.6%; at times, of at least 2.7%; at times, of at least 2.8%. In some examples, the tensile strain at yield is in a range of 2.2% and 2.85%.

In some examples of the presently disclosed subject matter, the injection molding specimen is characterized by a tensile strain at break (total elongation, according to ISO-527-2) of at least 3.2%; at times, of at least 3.3%; at times, of at least 3.4%; at times, of at least 3.5%; at times, of at least 3.6%; at times, of at least 3.7%.

In some examples of the presently disclosed subject matter, the injection molding specimen is characterized by a notched Izod impact (Impact strength, according to ISO-180) of at least 2.8kJ/m²; at times, of at least 2.9kJ/m²; at times, of at least 3.0kJ/m²; at times, of at least 3.1kJ/m².

In some examples of the presently disclosed subject matter, the injection molding specimen is characterized by a flexural modulus (according to ISO-178) of at least 1,000MPa or at times of at least 1,100MPa.

In some examples of the presently disclosed subject matter, the injection molding specimen is characterized by a flexural stress (according to ISO-178) of at least 15MPa; of at least 20MPa; at times, of at least 21MPa; at times of at least 22MPa; at times, of at least 23MPa; at times of at least 24MPa.

In some examples of the presently disclosed subject matter, the injection molding specimen is characterized by a density (according to ISO-1183) of about 0.97 g/cm³ or 0.98 g/cm³.

In some examples of the presently disclosed subject matter, the injection molding specimen is characterized by a Melt Flow Index (MFI) 230°C/2.16Kg (g/10 min, according to ISO1130) of above 25g/10min.

The composite material is prepared by a method that makes use of a heterogenous intake material. In the context of the present disclosure, the term *"intake material"* is to be understood as referring to waste matter, typically derived from domestic/household waste that comprises at least 40% organic matter.

In some examples of the presently disclosed subject matter, the intake material is derived from raw heterogenous waste. In the context of the present disclosure, when referring to *"raw heterogenous waste"* it is to be understood as material comprising a combination of a heterogenous blend of synthetic polymers (plastics) and nonsynthetic/non-plastic organic matter including at least cellulose and inorganic matter.

In some examples of the presently disclosed subject matter, the raw heterogenous waste is obtained from municipal, industrial and/or household waste and refers to such unsorted heterogenous waste material, namely, without being subjected to any substantial industrial sorting process. In some examples, the raw heterogenous waste is a combination of different organic substances that may originate from animal material, plant material, etc.

In some examples of the presently disclosed subject matter, the raw heterogenous waste material undergoes a pre-sorting process where large undesired waste items are removed. For example, the raw waste can be pre-sorted to remove any one of metals, glasses, and large minerals. The pre-sorting can be conducted manually, e.g. by conveying the raw waste on a conveyor belt and identifying the undesired large waste items.

In addition, or alternatively, the pre-sorting comprises separation using magnetic forces (magnet-based separation), typically for the separation and removal of ferrous metals. At times magnet-based separation is used for the separation and removal of magnetic metals and alloys, at times for the separation and removal of ferromagnetic materials.

In addition, or alternatively, the pre-sorting comprises separation using eddy current separator, typically for the removal of non-ferrous metals.

The raw waste that underwent pre-sorting process(es) still comprises a plurality of heterogenous plastic matter, non-plastic organic matter and inorganics. This sorted waste is referred to as the metal-free heterogenous waste.

The metal free heterogenous waste can then be subjected to several steps of drying and sorting, to obtain the intake material.

In the context of the presently disclosed subject matter, when referring to drying it is to be understood as removing a portion of the water from the heterogenous waste material. The drying should not be construed as removing all the water from the waste. In some examples, the raw waste comprises about 30% to 40%w/w water and drying involves removal of at least 50% of the water content; at times, at least 60% of water content; at times at least 70% water content; at times at least 80% water content; at times at least 90% water content; at times, at least 95% water content. The resulting waste material can then be regarded as a *dried waste material.* The dried waste material typically comprises less than 10wt% water (moisture).

In some examples, the dried waste material and consequently the intake material comprises less than 10wt% water; at times, less than 9wt% water; at times, less than 8wt% water; at times, less than 7wt% water; at times, less than 6wt% water; at times, less than 5wt% water; at times, less than 4wt% water; at times, less than 3wt% water; at times, less than 2wt% water.

Drying can be achieved by any means known in the art.

In some examples, drying is achieved by placing the heterogenous waste outdoors and allowing it to dry. In some other examples, drying is achieved by placing the waste under a stream of dry air and/or in an oven chamber and/or by squeezing the liquid out.

In the drying process, water and at times some volatile liquids are removed. This may include liquids having a vapor pressure of at least 15 mmHg at 20 °C, e.g. ethanol.

In some examples of the presently disclosed subject matter, the drying is achieved by a bio-drying process utilizing bacteria inherently present in the waste. To this end, the waste material is typically placed in a temperature-controlled environment. In some examples, bio-drying is performed at a temperature maintained around 70°C.

In some examples of the presently disclosed subject matter, bacteria are added to the heterogenous waste material (e.g. to the pre-sorted waste material) so as to induce or enhance the bio-drying process.

While not wishing to be bound by theory, it is believed that the residual remaining water content plays a role in the chemical process that occurs that converts the dried/waterless waste material into the composite material of the present disclosure.

In some examples of the presently disclosed subject matter, the waterless waste, is then subjected to size reduction, to obtain particulated waste material.

In the context of the present disclosure, the term *"particulate*" or " *particulating"* should be understood to encompass any process or combination of processes that result in the size reduction of the waste material. Particulating/down-sizing can take place by any one or combination of granulating, shredding, chopping, dicing, cutting, crushing, crumbing, grinding etc.

In some examples of the presently disclosed subject matter, the size reduction comprises shredding the waste (dried or non-dried, yet preferably dried) to particles of an average size below 40mm, at times, below 30mm; at times below 20mm; at times below 10mm.

At times, due to the friction within a shredder, the size reduction may result in further moisture reduction (e.g. by an additional of 2%-3%).

In some examples of the presently disclosed subject matter, the processing of the waste material comprises two or more drying stages. In some examples, a first drying stage takes place after metal removal and a second drying stage takes place after size reduction of the waste.

In some examples of the presently disclosed subject matter, the particulate waste is then subjected to a cleaning process where remnant metal and/or mineral particles ("impurities" which have not been removed before the down-sizing stage) are removed (those remaining after the first metal removal process).

In some examples of the presently disclosed subject matter, remnant impurities are removed by subjecting the particulate matter into an air separator system where heavy particles (e.g. metal particles and/or minerals) are eliminated by gravitation while a light waste fraction is collected and/or conveyed to the next process step.

The resulting light fraction comprises, at most, low amount of metal and minerals. Without being bound thereto, it is believed that the fraction comprises at most 1%w/w metals (ferrous and non-ferrous) and at most 5% minerals.

The resulting light fraction is then subjected to synthetics removal stage(s) using Near Infra-Red (NIR). NIR-based separation allows the optical sorting out of undesired plastic materials from other plastic waste based on polymer type (based on resins' wavelength signatures). As appreciated by those versed in the NIR technology, the NIR based separating system is programed to be able to identify different type of substances including many polymers and other chemical compounds. The operator of the system defines what compounds will stay and what will be sorted out. More specifically, the NIR separation step makes use of systems that are equipped with algorithms for each substance to be removed, including polymers incompatible with polyolefins, such as polymers having a melting point above 200°C or even above 210°C; and/or halogenated polymers and/or aryl-containing organic compounds and optionally other polymers, as desired. This algorithm enables the identification and separation of each compound accordingly. In this connection, it is appreciated by those versed in the art that each chemical entity has a complicated IR spectrum which is the "fingerprint" ID of the chemical entity. This fingerprint can be found in any publicly available "Chemical Atlas" and is recognized by computer programs.

In addition, it has been found that using NIR-based separation it is possible to remove much more synthetic polymers that removed manually. Thus, not only the possibility to selectively remove plastics is provided by the NIR-based separation, but also quantitatively, it is possible to reach synthetic polymer levels below 5wt% or even below 4wt% or even below 3wt% which is not possible by only manual separation.

The NIR based separation is controllable, namely, it is possible to selectively remove plastics out of the intake material. The result of the NIR-based separation is referred to herein by the term *NIR-processed intake material.*

Thus, in some examples of the presently disclosed subject matter, the NIR-based separation is controlled to selectively remove halogenated polymer (e.g. polyvinylchloride (PVC)) and aryl-containing compound and/or polymers having a melting point range of at least 200°C or higher. In this case, the resulting NIR-processed intake material will have low amount of at least PVC, polystyrene (PS) and more importantly PET. Specifically, the NIR-processed intake material from which the aryl containing compounds and halogenated polymers have been essentially removed, contains less than 5% PET and optionally less than 1% PVC and/or less than 3% PS. This 'plastic-less' intake material is then used for the production of the presently disclosed composite material (plastic-less or organic, depending on the level of synthetic polymer removal).

In some examples of the presently disclosed subject matter, the NIR-based separation is operated in a manner allowing for the separation of at least polymers that are recognized in the art as being incompatible with polyolefin.

In some preferred examples, the NIR-based separation is operated in a manner allowing for the separation of aryl-containing organic compounds, and preferably styrene or polystyrene organic polymers, and at least the removal of most if not all detectable amount of polyethylene terephthalate (PET). Thus, the NIR-based separation provides organic intake material that comprises less than 5wt% PET, at times, less than 4wt%, at times, less than 3wt%; at times, less than 2wt%; at times, less than 1wt%; at times, in an amount of between 0wt% and 3wt% (0wt% meaning no detectable amount of PET as determined according to ISO11358.

In some additional examples, the NIR-based separation is operated in a manner allowing for the separation of at least halogenated polymeric resins, such as polyvinyl chloride (PVC or vinyl) resins.

The NIR-processed intake material is subjected to mixing while heating under shear forces.

In some examples, the NIR-processed intake material is subjected to high-speed mixing.

In some examples, the NIR-processed intake material is subjected to extrusion.

In the context of the present disclosure, the heating while mixing under shear forces is not in a Banbury mixer.

It has been found that when the NIR-processed intake material comprises up to 10wt% synthetic polymers (i.e. essentially free of synthetic plastics) and up to 4wt% PET, it is preferable to mix while heat the same within a high-speed mixer. In fact, it has been found that when containing less than 10wt% plastics, the intake material cannot be processed within an extruder.

High-speed mixing is not an extruder. Rather, the high-speed mixing is performed in a closed (vacuum sealed) high-speed mixer allowing for mixing at elevated temperatures of up to 130°C, at a velocity of at least 2,500rpm and at a negative pressure.

When the intake material is essentially free of synthetic polymers, the mixing is at a high-speed mixer at a velocity of between 2,500rpm and 4,500rpm. In some examples, the mixing is at a high-speed mixer at a velocity of between 3,000rpm and 5,000rpm. In some examples, the mixing is at a high-speed mixer at a velocity of between 3,000rpm and 4,500rpm. In some examples, the mixing is at a high-speed mixer at a velocity of between 2,500rpm and 4,000rpm.

Further, when NIR-processed the intake material is essentially free of synthetic polymers, the mixing within the high-speed mixer is at a negative pressure of between about 0.5Bar and about 0.9Bar; at times between 0.6Bar and 0.9Bar; at times between 0.6Bar and 0.8Bar; at times at about 0.7Bar. The high-speed mixer is designed and operable to provide this negative pressure during the entire working time.

Yet further, when the NIR-processed intake material is essentially free of synthetic polymers, the high-speed mixing is at a temperature of up to about 120°C.

In some examples, the high-speed mixer is operated with a tip speed of between 30 and 100m/sec; at times, between 30 and 80m/sec; at times between 40 and 70m/sec; at times and preferably between 45 and 60m/sec. In some examples, the high-speed mixer is configured or constructed to be operated with a tip speed of between 45 and 60m/sec; or even of between 50 and 70m/sec; or even between 55 and 70m/sec.

In some examples, the tip speed is determined or dictated by the rotor diameter and rotational rate.

The mixing within the high-speed mixer is for a time sufficient for formation of a dry blend of the composite material with the above defined characteristic. The duration of mixing will depend on the velocity of mixing and the negative pressure within the mixer.

In some examples when using synthetic free intake material, the high-speed mixer can be operated at a velocity of between 2,500rpm and 3,000rpm; a negative pressure of about 0.7Bar, temperature of up to 120°C and for between 30minutes to 50mintues.

In some other examples, the high-speed mixer is designed and operable to allow mixing while creating a vortex motion, simultaneously, to achieve homogeneity during processing. At times, this can be achieved by using specially designed blades.

In some other examples, the high-speed mixer is designed and operable to maintain balance in the vortex motion so as to prevent vibrations. This is of particular relevance due to the existence of intake material that comprises a mixture of materials of different specific gravity.

Generally, the higher the velocity and/or the lower the negative pressure in the high-speed mixer, the shorter is the duration of mixing. In some examples, the mixing continues until the level of volatiles within the mixer is below 1%.

Without being limited thereto, and in accordance with one particular example, the high-speed mixer is characterized by the following:
Mixer blades tip speed 45- 60 m\s (mixer blades preferably protected from abrasion); temperature to achieve reaction 90-130 °C; vacuum of at least 0.7 bar for the entire working time; maximum humidity at the end of the reaction -1%.

In some examples, when the NIR-processed intake material comprises synthetic plastics in an amount of more than 10wt% (typically up to 40wt%), and in these cases the intake material is subjected to extrusion.

In some examples, the conditions of extrusion involve, at least
- an internal (running) temperature equal or below 200°C; at times between about 150°C and about 200°C; at times between about 120°C and about 180°C; at times between 160°C and 200°C, at times between 150° and 180°C;
- a minimal retention time within the extruder of at least 2.0 minutes; at times, of at least 2.5 minutes, at times, of at least 3 minutes, at times of at least 3.5 minutes at times, of at least 4 minutes, at times of at least 4.5 minutes, at times, of at least 5 minutes, at times of at least 5.5 minutes, at times, of at least 6 minutes, at times of at least 7 minutes. Yet, with the limitation that the residence time does not cause decomposition or combustion the material within the extrusion. Thus, in some cases, the retention time is defined to be within the range of about 2 to about 10 minutes, at times between about 3 minutes to 7 minutes, at times between about 2.5 minutes and 10 minutes at times between about 3.5 minutes and 8 minutes, at times between about 4.5 minutes and 8 minutes, at times between about 5.5 minutes and 7 minutes, at times between about 5.5 minutes and 6.5 minutes.

An extruder typically comprises a heated barrel containing rotating therein a single screw or multiple screws. There are various types of extrusions that can be employed in the context of the present disclosure.

Without being bound by theory, it is believed that applying sheer forces on the NIR-processed intake material, at material temperatures below 200°C results in the conversion of organic fiber material (lignin, cellulose, hemicellulose, and other carbohydrates) to partially carbonized lignocellulosic fibers that act as natural "molecular stiches" integrating (binding) plastics, and particularly, polyolefins with different polarities that otherwise phase separate, and create an organic-thermoplastic composite material.

In some examples of the presently disclosed subject matter, the extrusion is performed in a reactor extruder. When using a reactor of a type of a single screw extruder, it has been found that a minimal retention time should be of at least 3, or at least 4 and preferably at least 5 or 5.5 minutes.

In some examples of the presently disclosed subject matter, the reactor extruder is designed to operate at 30-10 rpm, at times at 40-90rpm.

The running temperature within the extrusion (i.e. the internal temperature, in other words, the temperature of the material being extruded) can be controlled by Thermocouple, such as Thermocouple type J.

In some examples of the presently disclosed subject matter, the extruder is equipped with at least 2 or more venting zones. The presence of two distinct venting zones along the extruder reduces the amount of volatile organic compounds within the extruded material and prevents the entrapment of the volatile compounds. It has been found that the presence of at least two venting zones is important to avoid air voids in articles of manufacture made from the disclosed composite material (the articles of manufacture being molded or extruded articles).

Various additives can be added to the NIR-processed heterogenous intake material prior to mixing while heating under shear forces (be it the high-speed mixer, the extruder or others). These include, without being limited thereto, any one or combination of zinc stearate, calcium stearate, antioxidants, UV stabilizers, blowing agents, plasticizers, elastomers, fillers e.g. talc and calcium carbonate; flame retardants and pigments like carbon black, titanium dioxide and other pigments as used in the plastics industry.

The resulting composite material can then be subjected to further processing. For example, the composite material can be controllably cooled, e.g. by exposing the material to a cooling air flow. At times, this may eliminate additional volatiles from the composite material.

In some examples of the presently disclosed subject matter, the composite material is further refined using conventional milling systems. Notably, when using a high-speed mixer, the size reduction/refinement typically takes place during the high-speed mixing.

In some examples, the milling involves passing the composite material through a continuous milling process, such as a Hammer Mill (e.g. type 40/32 HA).

In some examples of the presently disclosed subject matter, the composite material is subjected to an Impact milling process, where high speed rotating blades (beater plates) smash the composite material against the enclosing walls and against itself, and the friction causes reduction in size.

In some examples of the presently disclosed subject matter, refinement can be achieved by subjecting the composite material to "Knife Mil" such as that achieved by using ROTOPLEX 50\100. The technology is designed to make high cutting forces with a high throughput. Using the principle of "scissors" a drum with knives moves at high speed in front of a counter knife in a cooled environment.

In some examples of the presently disclosed subject matter, refinement is done by a combination of two or more refinement techniques, e.g. a first making use of hammer mill technology and the second making use of impact milling technology. The combination of technologies allows for the reduction of the powder sider below 1.5mm.

In some examples of the presently disclosed subject matter, the composite material is subject to size reduction. This can be achieved either within the mixing device, e.g. when using the high speed mixer, or after the mixing while heating step, e.g. when using an extruder. When the size reduction is separate from the mixing while heating step, it can be done using a combination of milling devices set to grind the extrudate into powder (refined composite material), and by sieving through 900µm (0.9mm) or 1400µm (1.4mm) sieves, two populations of powders are obtained, one having a particle size below 0.9mm (referred to herein by the abbreviated name "*Q0.9*") and the other having a particle size below 1.4mm (referred to herein by the abbreviated name "*Q1.4*"). It is desired that the composite material is in a form of a powder having a size within a few millimeters (0.1mm-10mm, or less than 10mm) range for the subsequent uses thereof, irrespective of the manner by which the composite material is produced.

In some examples of the presently disclosed subject matter, the resulting powder is sieved, e.g. using Vibrational Sieve systems that sifts the particle size by using different sizes of holes in different diameters.

In some examples of the presently disclosed subject matter, size reduction is to a particle size defined by d90 equal or below 1.4mm. At times, the size reduction is to a particle size of d90 equal or below 1.3mm; at times equal or below 1.2mm; at times equal or below 1.1mm; at times equal or below 1.0mm; at times equal or below 0.9 at times equal or below 0.8mm; at times equal or below 0.7mm.

In the following non-limiting examples, a refined composite material having a size of d90≤1.4µm is referred to by the abbreviation Q 1.4; and a refined composite material having a size of d90≤ 0.9mm is referred to by the abbreviation Q 0.9.

For the subsequent uses of the composite material, it can be used as a thermoplastic material. Thus, in accordance with some examples, the composite material is reheated to a temperature above 100°C. In some examples, the composite material turns into a flowable molten upon heating to a temperature above 120°C; at times, above 130°C; at times, above 140°C; at times, above 150°C; at times, above 160°C; at times, above 170°C; and even above 180°C, at times to any temperature below 200°C, as long as the composite material does not undergo any decomposition or combustion as a result of the heating.

The molten can then be shaped into a desired article of manufacture, using any known technique, *inter alia,* extrusion injection, molding including blow molding and rotational molding. In this manner, articles of a defined configuration may be manufactured. For example, the composite material can be used to produce a variety of articles of manufacture which are typically prepared from virgin plastics or recycled plastics. This includes, for example, flowerpots, housing siding, deck materials, flooring, furniture, laminates, pallets, septic tanks and the like. In the context of the present disclosure, the article of manufacture also encompasses pellets of the composite material combined with plastics, to be used as intake material in the plastics industry.

Thus, in accordance with the presently disclosed subject matter there is also provided a method of producing an article of manufacture, the method comprises forming a molten of one or more synthetic polymers (preferably thermoplastic polymers) and the presently disclosed composite material and shaping the molten into the shape of the article of manufacture.

Further, in accordance with the presently disclosed subject matter there is provided a method of producing an article of manufacture, the method comprises mixing one or more synthetic polymers, each of the one or more synthetic polymers having a carbon footprint as determined according to ISO14040: 2006; with the presently disclosed composite material; wherein said article of manufacture is characterized by a carbon footprint that is statistically significantly lower than that of the said one or more synthetic polymers. In some examples of the presently disclosed subject matter, the article of manufacture is as disclosed herein.

Yet further, there is provided in accordance with the presently disclosed subject matter a method of reducing carbon emission involved with manufacturing of an article of manufacture comprising one or more synthetic polymers, the method comprises manufacturing the article of manufacture with a blend of said one or more synthetic polymers and a composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;
wherein said composite material comprises less than 5wt% polyethylene terephthalate PET out of the total weight of the composite material; and
wherein said composite has a carbon footprint of below about -10KgCO₂ eq/Kg as determined according to ISO14040: 2006.

Examples and aspects of the methods disclosed herein are all referred to herein collectively by the term "method".

In some examples of the presently disclosed method, the one or more synthetic polymers are thermoplastic polymers.

In some examples of the presently disclosed method the one or more synthetic polymers is as defined herewith with respect to the article of manufacture aspect.

In accordance with some aspects of the presently disclosed subject matter the manufacturing of the article of manufacture involves heating to form a molten.

In accordance with some aspects of the presently disclosed subject matter the manufacturing of the article of manufacture involves extruding a blend of said one or more synthetic polymers and said composite material.

In accordance with some aspects of the presently disclosed subject matter the manufacturing of the article of manufacture involves injection molding of a blend of said one or more synthetic polymers and said composite material.

In accordance with some aspects of the presently disclosed subject matter the manufacturing of the article of manufacture involves compression molding of a blend of said one or more synthetic polymers and said composite material.

Various additives, fillers, etc., may be added to the composite material upon reheating/reprocessing into useful articles of manufacture, to impart certain desired properties to the article eventually obtained after cooling. Examples of fillers may include, without being limited thereto, sand, minerals, recycled tire material, concrete, glass, wood chips, thermosetting materials, other thermoplastic polymers, gravel, metal, glass fibers and particles, etc. These fillers may originate from recycled products, however, virgin materials, such as virgin plastics (e.g. polypropylene and/or polyethylene) may also be employed. Other additives may be added to improve the appearance, texture or scent of the composite material such as colorants, odor masking agents (e.g. activated carbon), oxidants (e.g. potassium permanganate) or antioxidants. Nonetheless it is noted that the properties of the composite material of the present disclosure and its potential uses are attained without the need to use binders or plasticizers although these may be added under some of the presently disclosed composite materials.

In some examples, the composite material is reheated together with externally added polyolefins. In some examples, the composite material is reheated with any one of polyethylene and polypropylene. The reheated mixture can be extruded into mixed pellets to be subsequently used as *an environment friendly* intake material in the plastic industry, due to its significantly lower carbon footprint as compared to that of the polyolefins with which it is reheated.

In some examples of the presently disclosed article of manufacture or method, the article of manufacture comprises at least 10wt% of the composite material compounded with the synthetic polymer(s). In some examples, the article of manufacture comprises at least 15wt% of the composite material compounded with the synthetic polymer(s). In some examples, the article of manufacture comprises at least 20wt% of the composite material compounded with the synthetic polymer(s). In some examples, the article of manufacture comprises at least 25wt% of the composite material compounded with the synthetic polymer(s). In some examples, the article of manufacture comprises at least 10wt%, at times, at least 20wt%, at times at least 30wt% of the composite material compounded with the synthetic/plastic polymer(s). In some examples, the article of manufacture comprises at least 35wt% of the composite material compounded with the synthetic polymer(s). In some examples, the article of manufacture comprises at least 40wt% of the composite material compounded with the synthetic polymer(s). In some examples, the article of manufacture comprises at least 45wt% of the composite material compounded with the synthetic polymer(s). In some examples, the article of manufacture comprises at least 50wt% of the composite material compounded with the synthetic polymer(s). In some examples, the article of manufacture comprises at least 55wt% of the composite material compounded with the synthetic polymer(s).

In some examples, the article of manufacture or the method disclosed herein provides an article of manufacture that comprises at most 90wt% of the composite material compounded with the synthetic polymer(s); at times, at most 85%. In some examples, the article of manufacture comprises at most 80wt% of the composite material compounded with the synthetic polymer(s). In some examples, the article of manufacture comprises at most 75wt% of the composite material compounded with the synthetic polymer(s). In some examples, the article of manufacture comprises at most 70wt% of the composite material compounded with the synthetic polymer(s). In some examples, the article of manufacture comprises at most 65wt% of the composite material compounded with the synthetic polymer(s). In some examples, the article of manufacture comprises at most 60wt% of the composite material compounded with the synthetic polymer(s). In some examples, the article of manufacture comprises at most 55wt% of the composite material compounded with the synthetic polymer(s). In some examples, the article of manufacture comprises at most 50wt% of the composite material compounded with the synthetic polymer(s).

In some examples, the article of manufacture or the method disclosed herein provides an article of manufacture that comprises between about 10wt% composite material and 90wt% composite material. In some examples, the article of manufacture comprises between about 20wt% composite material and 80wt% composite material. In some examples, the article of manufacture comprises between about 30wt% composite material and 60wt% composite material. In some examples, the article of manufacture comprises between about 20wt% composite material and 80wt% composite material.

The presently disclosed subject matter according to some examples of the article of manufacture aspect or to some examples of the method of producing the article of manufacture concerns an article comprising at least 10wt% of said one or more synthetic polymers, at times, at least 15wt%; at times at least 20wt%; at times, at least 25wt%; at times, at least 30wt%; at times, at least 35wt%; at times, at least 40wt%; at times, at least 45wt%; at times, at least 50wt%; at times, at least 55wt%; at times, at least 60wt%; at times, at least 65wt%; at times, at least 70wt%.

The presently disclosed subject matter according to some examples of the article of manufacture aspect or to some examples of the method of producing the article of manufacture concerns an article comprising at least 5wt% of said composite material; at times, at least 10wt%; at times, at least 15wt%; at times, at least 20wt%; at times, at least 25wt%; at times, at least 30wt%; at times, at least 35wt%; at times, at least 40wt%; at times, at least 45wt%; at times, at least 50wt%; at times, at least 55wt%; at times, at least 60wt%; at times, at least 65wt%; at times, at least 70wt%; at times, at least 75wt%; at times, at least 80wt%; at times, at least 85wt%.

In some examples, the article of manufacture or the method of producing the same are designed to include a composite material to synthetic polymer in the range of between 20wt% and 80wt% to 80wt% and 20wt%; at times, in the range of between 30wt% and 70wt% to 70wt% and 30wt%; in the range of between 40wt% and 60wt% to 60wt% and 40wt%; at times, about 50wt% to about 50wt%.

In accordance with some aspects of the article of manufacture or its method of production, the one or more synthetic polymers is selected from the group consisting of polyolefins and biodegradable polymers.

In some examples, the one or more synthetic polymers comprises virgin plastics.

In some examples, the virgin plastic comprises at least a polyolefin (e.g. PP and/or PE).

In some examples, the one or more synthetic polymers is selected from polypropylene (PP), polyethylene (PE).

In some examples, particularly when the composite material comprises less than 10wt% synthetic polymers, the composite material can be compounded with a biodegradable polymer to form a biodegradable articles of manufacture.

In some examples, the article of manufacture is compounded with polylactic acid (PLA), a biodegradable polymer. It has been surprisingly found that when the composite material, having less than 10wt% synthetic plastics (i.e. the *Organic composite*), is compounded with a biodegradable polymer, such as PLA, the combined article of manufacture exhibits unique biodegradability, essentially similar to that of cellulose, and a low carbon footprint as described in Table 4.

In view of the unique biodegradability of the composite material comprising low amounts of synthetic plastics it can have many uses where there is interest in using biodegradable polymers, with low carbon impact/footprint, such as, without being limited thereto, packaging articles, e.g. food package, and preferably food approved packaging.

The composite material of the present disclosure as well as the material obtained by mixing the composite material with plastics can thus be processed through a variety of industrial processes, known per se, to form a variety of semi-finished or finished products.

As used herein, the forms "***a***", "***an***" and *"**the**"* include singular as well as plural references unless the context clearly dictates otherwise. For example, the term "***a particulate matter"*** includes one or more types of particulate matter having the recited characteristics.

Further, as used herein, the term ***"comprising"*** is intended to mean that the composite material include the recited components, i.e. non-plastic organics, plastics and inroganics, but not excluding other elements. The term ***"consisting essentially of***" is used to define composite material which include the recited elements but exclude other elements that may have an essential significance on the properties of the composite material. ***"Consisting of***" shall thus mean excluding more than trace elements of other elements. Embodiments defined by each of these transition terms are within the scope of this invention.

Further, all numerical values, e.g. the amounts or ranges of the components constituting the composite material or the heterogenous intake material disclosed herein are approximations which are varied (+) or (-) by up to 20%, at times by up to 10% of from the stated values. It is to be understood, even if not always explicitly stated that all numerical designations are preceded by the term ***"about".*** For example, the term "about 10%" should be understood as encompassing the range of 9% to 11%; the terms about 100°C denotes a range of 90 to 110°C.

The invention will now be exemplified in the following description of experiments that were carried out in accordance with the invention. It is to be understood that these examples are intended to be in the nature of illustration rather than of limitation. Obviously, many modifications and variations of these examples are possible in light of the above teaching. It is therefore, to be understood that within the scope of the appended claims, the invention may be practiced otherwise, in a myriad of possible ways, than as specifically described hereinbelow.

### NON-LIMITING EXAMPLES

In the following non-limiting examples, two types of composite materials have been prepared from household waste. In both, the processing of the heterogenous waste until the selective removal of plastics using NIR, this including the pre-sorting, the shredding and the drying. Further, similar analyses were performed on the resulting two exemplary types of composite material.

In the following Examples various devices and systems were employed. It is to be understood that while some of the devices were constructed for the purpose of the present invention, all are based on conventional devices. These include a shredder, a single screw extruder, an injection molding machine, a compression molding press and any other machine in which the material undergoes shearing and/or heat, such as a granulator, pelletizing press, mill etc.

### Devices and Methods

***Pre-sorting** -* involves manual removal of metals, glass and minerals.

***Metal separating magnet*** (IFE MPQ 900 F-P) was used to separate out ferrous material. The metal separating magnet includes an electromagnet flying over a conveying belt; the coil creates a narrow and deep magnetic field that lifts out the ferrous metal parts and transports them a short distance through its own conveyor belt, thus separating the magnetic metals from the rest of the materials. Metals are disposed into a bin at the bottom of the system and sent back to recycling. The magnetic belt system is installed at the end of the conveyor belt and the box is positioned exactly above the flight parabola to catch magnetic materials.

***Eddy current system*** (Wagner magnet 0429\0-37) was used to separate metals. Specifically, a 2.5 m wide Eddy current belt with neodymium high gradient magnets was used. The pole system was eccentrically installed inside a slower belt drum. The belt drum has an external speed of 1 to 3 m/s. The internal drum runs up to 3000 rpm. This creates an eddy current field that repels non-ferrous metals (which are thus removed) but attracts and heats ferrous metals. (Wagner Magnete 0429\0-37). The separation force is highest with aluminum and decreases over brass, copper to the other non-ferrous metals.

Eddy current can be replaced with metal detectors to achieve similar results.

At the end of this sorting process, a household solid organic waste with significantly reduced metal/plastic/inorganic was obtained. Final removal of these impurities was performed following drying.

At this stage, the heterogenous household solid natural waste (HSNW) typically contains high water/humidity content of between 25% to 50%. Therefore, this HSNW was transferred to a drying process.

***Bio-drying*** (Compost Bio-Drying Systems) - Bio-drying was activated by bacteria and multicellular organisms present in the household waste. This process occurs via the digestion of organic material by bacteria which creates heat. It is important that the household waste is loosely stratified under controlled conditions and ventilated with a precisely defined amount of air. This air must not be too cold or too humid while the blowing force is digitally controlled. Over a period of several days and up-to 2 weeks the municipal waste (MW) heats up and gains heat - of up to 70°C.

The heat was regulated with a controlled supply of air and the optimum process temperature of around 55°C to 70°C is set. When the MW reaches a dryness level of about 15 to 20% water content, or even 15% to 18%, the activity of the bacteria decreases considerably, and the bi-drying process is considered complete.

***Secondary drying** -* A second drying stage took place in an industrial rolling bed dryer working on a principle of hot air assisted drying. This drying stage reduced moisture level to below 10%.

***Shredder*** (Vecoplan VAZ 1300) was used to particulate the dried sorted waste. Specifically, two types were used: primary *pre-crusher* and *secondary shredder.*

A *pre-crusher* is defined by one, two, three or four shafts coupled with hydraulic or electromechanical drives. The characteristic of primary pre-crushers is that a very large force is generated to break the waste into small pieces. Non-crushable materials that interfere with the secondary crushing can be separated. The shredding shafts used are mechanically connected to the shafts and the peripheral speed of the shafts is low.

The *secondary shredding* was done by means of 1 or 2 rotors mechanically connected with wear tools and counter blades, a screen basket was installed in front of the rotors to control the particle size.

***Air separator system*** (IFE UFS600X+1000X) was used to separate between light and heavy particles. Specifically, the air separator/classifier consists of an acceleration belt on which the particles are positioned in one layer, and a subsequent air bar that blows an adjustable, defined air flow into the material. After the air bar, there is usually a separator between the light and heavy particles. Following the separation there is a divider space which gives the light parts the opportunity to sink down. The heavy materials are separated between the air bar and the separator.

***Near Infra-Red system*** (SESOTEC MN 1024) was used to selectively sort out/separate out specific plastic polymers. Specifically, a system with a scanner and with active sensor support and active blow bar were used. In addition, the system was equipped with a high resolution NIR camera with at least 1.5 mm sensitivity, which captured the reflection of the IR spectrum of special substances and compares it with stored spectra of various substances. If the system detected a desired substance, the freely programmed function was queried in a binary form - separate or keep. The particles were then blown out with the same fineness as the detection using the connected blow nozzle bar.

The selective sorting resulted in a selected heterogenous waste, in particulate form, and comprising less than 1% PVC and less than 3% PS, and less than 5% PET.

***Single Screw Extruder*** (Type F: GRAN 145) was used. Specifically, the single screw extruder had the dimensions of 145 mm diameter, screw length: 950 cm, clearance of screw to barrel: 0.5-2 mm, high wear resistant screw and barrel, die opening diameter of up to 30 mm and 2 venting zones. In operation, anti-bridging silo, rotors kept the *Ready To Use* (RTW, i.e. the sorted heterogeneous waste) in motion which prevented the material from bridging and ensures flowability. Feeder screw was automatically activated depending on the utilization of the extruder capacity.

After the extruder process the material was moved into a controlled cooling system with a cooling conveyor of 800 cm length and air flow of 15000 meters cubic meter per hour.

***High speed mixer*** - A high-speed heating mixer operated at 3,000 rpm under negative pressure (0.7Bar for 40min, at a temperature of up to 120°C).

***Milling devices*** - Several milling devices were employed to reduce size of the end-product, i.e. the composite material.

*Hammer Mill type 40\32 HA* - The Hammer Mill grinds soft to medium-hard pieces in a continuous process, in which the material undergoes a process of particle mixing while grinding thus creating homogeneity.

*Impact Mill* (*ULTRAPLEX UPZ 500)* -The particle size was reduced to another level by using high-speed rotating blades (beater plate) which "hits" the particles to the walls and among themselves and where significant friction between the sides of the grinder (grinding tracks) and the beater plate reduces the material into a powder form. The resulting powder went through a Vibrational Sieve system that sifts the particle size by using different sizes of holes in different diameters.

The reduced size particles were conveyed then from the Hammer Mill through blowers to the next milling stage, the Impact Mill.

*Knife Mil (ROTOPLEX 50\100)* - particles of 0.9 mm size (and below) and those of 1.4mm, each went directly to storage. The particle size above 1.4 mm underwent further treatment using a "Knife Mil" (ROTOPLEX 50\100). Specifically, a knife mil is designed to create high cutting forces with a high throughput. Using the principle of "scissors" a drum with knives moves at high speed in front of a counter knife in a cooled environment. Via the knife mil system, particles (especially the fibers) were further reduced in size below 1.4 mm.

***Elemental Analyzer (Flash EA 1112)** -* was used for determination of total carbon (C), hydrogen (H), nitrogen (N), sulfur (S) and oxygen (O).

***Fourier-transform infrared spectroscopy (FTIR)*** - Nicolet 6700, Spectrophotometer for the Mid-Infra-Red range. Absorbance Spectra were obtained by recording the absorbance as a function of wavelength. Concentrations were calculated from absorbance measurements at specific wavelengths which are provided within the manufacturer's operating instructions and are based on commonly known libraries.

***Thermogravimetry (TG)- Differential Scanning Calorimetry (DSC)-*** STA TG-DSC 449 F3 Jupiter^{®} (NETZSCH-Geratebau) - The simultaneous application of TG and DSC to a single sample in an STA instrument yields more information than separate application TG and DSC in two different instruments. STA enables simultaneous quantitative monitoring of mass- and thermodynamical changes which occur in the tested material under heating. Coupling of MS to the instrument for thermal analysis allows identification of materials/components being evolved during the heating experiment. Therefore, combination of STA TG-DSC with MS provides a unique straightforward tool for distinct experimental characterization of chemical reactions and phase transformation in a wide range of materials. The TG-DSC was operated under the following conditions:

| | | |
|---|---|---|
| Furnace | - | Silicon carbide |
| Temperature range | - | -150°C to 1550°C |
| Heating rates | - | 0.001 K/min to 50 K/min |
| Cooling rate(free cooling) | - | 1540 to 100°C: 60 min |
| Weighing range | - | 35 g |
| Max. Initial weight | - | 35 g |
| Atmospheres | - | inert (N₂, Ar), oxidizing (dry air), reducing (Ar+5% H₂su), vacuum |
| Integrated Mass Flow Controller | - | for 2 purge gases and 1 protective gas |
| High Vacuum-Tight Assembly | - | up to 10⁻⁴ mbar (10⁻² Pa) |

***Gas chromatography-mass spectrometry (GC-MS)*** - Samples of the composite material were analyzed following a 24 hours Head-Space extraction, using a gas chromatography (GC) sniffer, followed by gas chromatography mass spectrometry (MS). Specifically, An Agilent 7890A GC was equipped with an auto sampler, a split /splitless injector and three detectors: FID and ECD and TCD. The GC was equipped with electronic control of gas pressures and flows.

***Tensile tests*** - tensile properties were determined according to ISO 521-2:1996 using specimen type A1: overall length ≥ 150-200mm, length of narrow parallel sided portion = 80±2mm, radius 20-25mm, distance between broad parallel sided portions 104-113mm, widths at ends = 20±0.2mm, width at narrow portion 10±0.2mm, preferred thickness 4±0.2mm, gauge length 50±0.5mm and initial distance bewtween grips = 115±1mm.

***Impact Izod (notched)*** - Izod Impact was measured using ISO 180 (1J Pendulum)/ASTM D256 (1J Pendulum), Notched, Hammer 1J. (Izod Impact Strength, edgewise notched specimens)

***Charpy Impact*** - Charpy Impact test was conducted according to ISO 179, using Notched, Hammer 1J *(Charpy Impact Strength, edgewise notched specimens, according to ISO 179,* Pendulum weight 1J).

***Flexural tests*** - The test was conducted using ASTM D790 (ISO 178) method, with test speed of 5mm/min.

***Ash content*** - Ash was determined according to ISO 3451 method A. Used two test portions of 5gr each one and burned at 950±50⁰C for 30 min.

***Surface energy*** - Surface energy was measured ASTM D2578 using Dyne Pens.

***Oxygen index*** - oxygen index was determined according to ISO 4589-2.

***Density*** - density was measured using MRC Laboratory Instruments (model BPS750-C2V2), according to ASTM D792= ISO1183-1 procedure (Plastics - Methods for determining the density of non-cellular plastics). Specimen should be at least 1cm³ and at least 1mm thick (for each 1 gr of weight).

### Example 1 - Plastic-less Composite preparation

Mixed household waste underwent a pre-sorting and bio-drying process as described above. In the sorted intake material, while the plastic was reduced, it was still above 10wt% and thus is not regarded as "plastic free".

The bio-dried municipal waste was subjected to shredding to obtain waste particle size of not more than (up to) 30 millimeters. Particle shredded at or below 30 millimeters were removed through a dedicated basket while larger particles continued to rotate in the shredder until they reached the desired size. Notably, the shredding created some friction which further reduced moisture by 2%-3%. The shredded particles became more uniform allowing the next stages of the process to work more efficiently.

Following the shredding, some of the impurities that were "glued" or wrapped in the shredded waste particles were released by an air separator system as described above. The shredded material eliminated any reminiscent parts of heavy particles (metals or minerals) from the shredded material (resulting in the formation of a "light fraction").

The light fraction was then conveyed to the NIR separation system as described above, where the halogenated polymer such as PVC and aryl containing compounds such as polystyrene and/or PET were selectively removed.

The material following the NIR separation provided the sorted heterogenous intake material (referred to herein as the "NIR-processed intake material").

Extrusion: the NIR-processed intake material was subjected to extrusion. The extruder was operated to have a running temperature of between 150°C and 180°C, residence time of 5-7 minutes and rotating speed of 60-90 rpm.

After passing the extruder process, the resulting molten material was cooled to 40°C via a cooling conveyor (800 cm length and air flow of 15000 cubic meter per hour).

The cooled composite material was subjected to size reduction/size refinement by passing the same through a Hammer Mill followed by an Impact Mill and the refined particles were then selectively sieved to provide either Q0.9 (particles of up to 0.9mm) or Q1.4 (particles of up to 1.4mm) products.

### Example 2 - Organics Composite Preparation

Mixed household waste underwent a pre-sorting and bio-drying process as described above.

Following NIR separation of essentially all synthetic plastics, the remaining organic waste material was essentially free of any of metal, inorganic and plastic material (thus being at least 90% organics). This essentially dry and particulate, fluffy, synthetic free intake material was used for processing by a high-speed mixer into the desired organic composite material.

Specifically, the synthetic free organic fluffy intake material was transferred into a high-speed heating mixer that is designed to mix powders. In this connection, it is noted that the fluffy intake material could not be processed in a conventional Banbury mixer, which while being an intensive mixer, it is designed to mix rubbers or melted polymers and is not suitable for intensively mixing of powders and/or fluffy materials.

The principle of the high-speed mixer was required to allow the simultaneous mixing, milling and homogenization while heating due to the created vortex and internal friction between the powder particles. The internal temperature was monitored and once reached an internal temperature of 90°C, a negative pressure was applied (0.7Bar) to remove volatiles within the closed mixer. The mixing process under vacuum is continued until the internal temperature reached - 120°C.

The resulting homogenous - synthetic-free composite material was then transferred to an industrial cooler mixer to reach - temperature lower than 40°C.

### Analyses -

### Physical properties

The Plastic-Less composite material and the Organic composite material were analyzed for their physical properties, after being compounded with 70% polypropylene (MFI 230°C/2.16Kg of polypropylene being 60g/10min).

**Table 2** summarizes the different examined properties, the test standard used for the two non-limiting examples of composite material disclosed herein.

**Table 2: Physical properties**

| | | **30%: Organics** | **30%: Plastic-Less** |
|---|---|---|---|
| | | **70%: PP** | **70%: PP** |
| | Standard | | |
| Tensile Young's modulus (MPa) | ISO 527-2 | 1200 | 1480 |
| Tensile Yield Stress (MPa) | | 13.8 | 15.5 |
| Tensile Yield strain (%) | | 2.9 | 2.9 |
| Tensile Total elongation (%) | | 3.8 | 4.1 |
| Impact Strength (kJ/m²) | ISO 180 | 3.1 | 4.8 |
| Flexural modulus (Mpa) | ISO 178 | 1140 | 1280 |
| Flexural Ultimate stress (Mpa) | | 25.0 | 28.5 |
| Specific gravity (g/cm3) | ISO 1183 | 0.98 | 0.97 |
| MFI 230 °C/2.16Kg (g/10 min) | ISO 1133 | 58 | 27 |

### Carbon Footprint

A carbon footprint is a measure of the greenhouse gases released by given activities, such as the manufacture of a specific product, and is expressed in metric tons of carbon dioxide-equivalent (CO₂eq) emissions generated.

The two different Composite materials exemplified herein were evaluated for their carbon footprint, the latter being determined by LCA (Life Cycle Assessment) according to ISO14040, using LCA calculator software from the total energy mass balance required by the new process. The methodology of calculation is provided hereinabove.

Specifically, the methodology of calculating the LCA of the two composite materials required determining the impact of the conversion activity. In this connection, it is noted that the calculation of the carbon footprint of each of the composite material accounted for only the energy used for the conversion process itself and does not include the preceding drying and shredding steps, as these were undertaken before the waste reaches the processing facility.

The following non-limiting examples are based on a plant based in Tze'elim in southern Israel, where little energy is required in order to produce the different carbon emission reducing types of Composite material (e.g. Plastic-Less and Organics) due to the availability of solar heat for drying. Thus, under the conditions of this non-limiting example, only 0.39 kWh of electricity was needed to produce each kilogram of Organics composite material, which is converted to 1.40 MJ/kg.

The climate impact of the Israeli electricity mix was 0.31 kg CO₂eq/MJ (GWP₁₀₀) and 0.35 kg CO₂eq/MJ (GWP₂₀). This information was taken from the LCA software IMPACT 2002+ (vQ2.28) (July 2017) V2.28/IMPACT 2002+ and was in determined in conjunction with sustainability consultants at Quantis.

The net LCA was calculated by subtracting the avoided emission calculated according to the Equation presented in **Figure 1****,** from the climate impact of the conversion process's energy use (above). It has been found that the net impact of the composite material disclosed herein is negative for both types of composite material.

**Table 3A** provides the avoided emissions and net climate impact of the *synthetic free composite* material that comprised 93.3% food waste and 6.7% inorganics, (rounded numbers).

**Table 3A - Climate impact for Synthetic Free Composite material**

| **Global Warming Potential (GWP) Metric** | **Conversion Activity Impact (kg CO₂eq/kg composite)** | **Avoided Emissions (kg CO₂eq/kg composite)** | **Net Climate Impact (kg CO₂eq/kg composite)** |
|---|---|---|---|
| **GWP₂₀** | 0.49 | 17.87 | -17.39 |
| **GWP₁₀₀** | 0.43 | 7.07 | -6.63 |

**Table 3B** provides the avoided emissions and net climate impact (rounded numbers) of the *Plastic-less composite* material (i.e. comprising about 65% non-plastic organics and about 35% inorganics).

**Table 3B - Climate impact for Plastic-less Composite material comprising more than 10% plastics**

| **Global Warming Potential (GWP) Metric** | **Conversion Activity Impact (kg CO₂eq/kg composite)** | **Avoided Emissions (kg CO₂eq/kg composite)** | **Net Climate Impact (kg CO₂eq/kg composite)** |
|---|---|---|---|
| **GWP₂₀** | 0.49 | 12.17 | -11.69 |
| **GWP₁₀₀** | 0.43 | 4.81 | -4.38 |

For comparison, the carbon footprint of the two composite materials was compared to that of virgin polypropylene (PP), virgin polylactic acid (PLA) and to that of the composite material described in WO10082202 (hereinafter the *"Unsorted Composite*"). The comparison is provided in Table **4.**

Table 4 provides the carbon footprint of either material alone or in combinations.

**Table 4: Carbon Footprint**

| **Composition** | **Carbon Footprint** (KgCO₂ eq/Kg) |
|---|---|
| 100% Polypropylene (PP) | 2.7 |
| 100% polylactic acid (PLA) | 3.8 |
| 100% *Unsorted* Composite* | -7.2 |
| 100% *Organics* Composite | -17.4 |
| 100% *Plastic-less* Composite | -11.7 |
| 70% PP + 30% *Organics* Composite | -3.3 |
| 70% PLA + 30% *Organics* Composite | -2.6 |

| | |
|---|---|
| *as described in WO10082202 | |

Table 3 clearly shows that the *Organics Composite* disclosed herein has a much more significant impact on the environment, by its negative net carbon footprint, which is greater than even the *Unsorted Composite* of WO10082202.

Similarly, Table 4 shows that the Plastic-less composite has a significantly greater environmental impact than the Plastic/Organic Composite.

The benefits of the composite materials disclosed herein, which are at least essentially free of PET, are shown in Table 4, in comparison to the carbon footprints of the polymers without the composite material, which are positive.

## Claims

1. Use of a composite material for reducing carbon emission, the composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;
wherein said composite material comprises less than 5wt% polyethylene terephthalate PET out of the total weight of the composite material; and
wherein said composite has a carbon footprint of below about -10KgCO₂ eq/Kg as determined according to ISO14040: 2006.

2. The use according to claim 1, wherein said composite material comprises up to 40wt% synthetic thermoplastic polymers; preferably up to 5wt% synthetic thermoplastic polymers.

3. The use according to claim 1 or 2, wherein said heterogenous organic matter in said composite material comprises organic heterogenous waste, with preferably less than 1% halogenated polymers.

4. The use according to any one of claims 1 to 3, wherein said composite material is in combination with at least one synthetic polymer, wherein the combination exhibits a carbon footprint that is statistically significantly lower than the carbon footprint of the synthetic polymer alone.

5. The use according to any one of claims 1 to 4, wherein a sample of said composite material that has been subjected to injection molding with 70wt% polypropylene (PP), has at least one of the following:
- tensile modulus of at least at least 1,000MPa;
- flexural modulus of at least 1,000MPa;
- flexural stress of at least 15MPa.

6. An article of manufacture comprising a combination of one or more synthetic polymers and a composite material comprising (i) at least 40wt% of heterogenous organic matter out of a total weight of the composite material, said heterogenous organic matter comprising at least cellulose (ii) a plurality of synthetic polymers and (iii) up to 15wt% inorganic matter;wherein said composite material comprises less than 5wt% polyethylene terephthalate PET out of the total weight of the composite material; and wherein said composite has a carbon footprint of below about -10KgCO₂ eq/Kg as determined according to ISO14040: 2006, the article of manufacture exhibiting a carbon footprint that is lower than the total carbon footprint of the one or more synthetic polymers.

7. The article of manufacture of claim 6, comprising at least one thermoplastic synthetic polymer.

8. The article of manufacture of claim 6 or 7, comprising at least 10% synthetic polymers.

9. The article of manufacture of any one of claims 6 to 8, having a negative carbon footprint.

10. A method of producing an article of manufacture, the method comprises the use according to any one of claims 1 to 5, wherein the method comprises forming a molten of one or more synthetic polymers and the composite material and shaping the molten into the shape of the article of manufacture.

11. The method of claim 10, wherein said article of manufacture comprises at least 10wt% of said one or more synthetic polymers, preferably at least 30wt% of said one or more synthetic polymers; and preferably the one or more synthetic polymers is a virgin polymer, such as a polymer selected from the group consisting of polyolefins and biodegradable polymers, such as polypropylene (PP), polyethylene (PE), polylactic acid (PLA).

12. The method of any one of claims 10 to 11, wherein said article of manufacture comprises at least 10wt% of said composite material.

13. The use of any of claims 1 to 5, comprising reducing carbon emission involved with manufacturing of an article of manufacture comprising one or more synthetic polymers, the use comprises manufacturing said article of manufacture with a blend of said one or more synthetic polymers and the composite material.

14. The use of claim 13, wherein said blend comprises at least 10wt% of at least one synthetic polymer and/or at least 10wt% of said composite material.

## Patentansprüche

1. Verwendung eines Verbundmaterials zum Reduzieren der CO₂-Emission, wobei das Verbundmaterial (i) mindestens 40 Gew.-% heterogenes organisches Material bezogen auf ein Gesamtgewicht des Verbundmaterials, wobei das heterogene organische Material mindestens Cellulose umfasst, (ii) eine Vielzahl von synthetischen Polymeren und (iii) bis zu 15 Gew.-% anorganisches Material umfasst,
wobei das Verbundmaterial weniger als 5 Gew.-% Polyethylenterephthalat PET bezogen auf das Gesamtgewicht des Verbundmaterials umfasst und
wobei der Verbund einen CO₂-Fußabdruck von unter etwa -10 kg CO₂ eq/kg aufweist, bestimmt gemäß ISO 14040:2006.

2. Verwendung gemäß Anspruch 1, wobei das Verbundmaterial bis zu 40 Gew.-% synthetische thermoplastische Polymere umfasst; vorzugsweise bis zu 5 Gew.-% synthetische thermoplastische Polymere.

3. Verwendung gemäß Anspruch 1 oder 2, wobei das heterogene organische Material in dem Verbundmaterial organischen heterogenen Abfall umfasst, mit vorzugsweise weniger als 1 % halogenierten Polymeren.

4. Verwendung gemäß einem der Ansprüche 1 bis 3, wobei das Verbundmaterial in Kombination mit mindestens einem synthetischen Polymer vorliegt, wobei die Kombination einen CO₂-Fußabdruck aufzeigt, der statistisch signifikant niedriger ist als der CO₂-Fußabdruck des synthetischen Polymers allein.

5. Verwendung gemäß einem der Ansprüche 1 bis 4, wobei eine Probe des Verbundmaterials, die einem Spritzgießen mit 70 Gew.-% Polypropylen (PP) unterzogen wurde, mindestens eines der Folgenden aufweist:
- einen Zugmodul von mindestens mindestens 1.000 MPa;
- einen Biegemodul von mindestens 1.000 MPa;
- eine Biegespannung von mindestens 15 MPa.

6. Herstellungsgegenstand, umfassend eine Kombination aus einem oder mehreren synthetischen Polymeren und einem Verbundmaterial, umfassend (i) mindestens 40 Gew.-% heterogenes organisches Material bezogen auf ein Gesamtgewicht des Verbundmaterials, wobei das heterogene organische Material mindestens Cellulose umfasst, (ii) eine Vielzahl von synthetischen Polymeren und (iii) bis zu 15 Gew.-% anorganisches Material, wobei das Verbundmaterial weniger als 5 Gew.-% Polyethylenterephthalat PET bezogen auf das Gesamtgewicht des Verbundmaterials umfasst und wobei der Verbund einen CO₂-Fußabdruck von unter etwa -10 kg CO₂ eq/kg aufweist, bestimmt gemäß ISO 14040:2006, wobei der Herstellungsgegenstand einen CO₂-Fußabdruck aufzeigt, der niedriger ist als der gesamte CO₂-Fußabdruck des einen oder der mehreren synthetischen Polymere.

7. Herstellungsgegenstand nach Anspruch 6, umfassend mindestens ein thermoplastisches synthetisches Polymer.

8. Herstellungsgegenstand nach Anspruch 6 oder 7, umfassend mindestens 10 % synthetische Polymere.

9. Herstellungsgegenstand nach einem der Ansprüche 6 bis 8, mit einem negativen CO₂-Fußabdruck.

10. Verfahren zum Herstellen eines Herstellungsgegenstands, wobei das Verfahren die Verwendung gemäß einem der Ansprüche 1 bis 5 umfasst, wobei das Verfahren das Bilden einer Schmelze aus einem oder mehreren synthetischen Polymeren und dem Verbundmaterial und das Formen der Schmelze in die Form des Herstellungsgegenstands umfasst.

11. Verfahren nach Anspruch 10, wobei der Herstellungsgegenstand mindestens 10 Gew.-% des einen oder der mehreren synthetischen Polymere umfasst, vorzugsweise mindestens 30 Gew.-% des einen oder der mehreren synthetischen Polymere, und wobei vorzugsweise das eine oder die mehreren synthetischen Polymere ein Neupolymer ist bzw. sind, wie zum Beispiel ein Polymer, ausgewählt aus der Gruppe bestehend aus Polyolefinen und biologisch abbaubaren Polymeren, wie zum Beispiel Polypropylen (PP), Polyethylen (PE), Polymilchsäure (PLA).

12. Verfahren nach einem der Ansprüche 10 bis 11, wobei der Herstellungsgegenstand mindestens 10 Gew.-% des Verbundmaterials umfasst.

13. Verwendung nach einem der Ansprüche 1 bis 5, umfassend das Reduzieren der CO₂-Emission, die mit dem Herstellen eines Herstellungsgegenstands verbunden ist, der ein oder mehrere synthetische Polymere umfasst, wobei die Verwendung das Herstellen des Herstellungsgegenstands mit einer Mischung aus dem einen oder den mehreren synthetischen Polymeren und dem Verbundmaterial umfasst.

14. Verwendung nach Anspruch 13, wobei die Mischung mindestens 10 Gew.-% mindestens eines synthetischen Polymers und/oder mindestens 10 Gew.-% des Verbundmaterials umfasst.

## Revendications

1. Utilisation d'un matériau composite pour réduire les émissions de carbone, le matériau composite comprenant (i) au moins 40 % en masse de matière organique hétérogène par rapport à la masse totale du matériau composite, ladite matière organique hétérogène comprenant au moins de la cellulose, (ii) une pluralité de polymères synthétiques, et (iii) jusqu'à 15 % en masse de matière inorganique ;
dans laquelle ledit matériau composite comprend moins de 5 % en masse de polytéréphtalate d'éthylène (PET) par rapport à la masse totale du matériau composite ; et
dans laquelle ledit composite a une empreinte carbone inférieure à environ -10 kg CO₂eq / kg telle que déterminée selon la norme ISO14040:2006.

2. Utilisation selon la revendication 1, dans laquelle ledit matériau composite comprend jusqu'à 40 % en masse de polymères thermoplastiques synthétiques ; de préférence jusqu'à 5 % en masse de polymères thermoplastiques synthétiques.

3. Utilisation selon la revendication 1 ou 2, dans laquelle ladite matière organique hétérogène dans ledit matériau composite comprend des déchets organiques hétérogènes, avec de préférence moins de 1 % de polymères halogénés.

4. Utilisation selon l'une quelconque des revendications 1 à 3, dans laquelle ledit matériau composite est combiné à au moins un polymère synthétique, dans laquelle la combinaison présente une empreinte carbone statistiquement significativement inférieure à l'empreinte carbone du polymère synthétique seul.

5. Utilisation selon l'une quelconque des revendications 1 à 4, dans laquelle un échantillon dudit matériau composite qui a été soumis à un moulage par injection avec 70 % en masse de polypropylène (PP) présente au moins l'une des caractéristiques suivantes :
- un module de traction d'au moins 1 000 MPa ;
- un module de flexion d'au moins 1 000 MPa ;
- une contrainte de flexion d'au moins 15 MPa.

6. Article manufacturé comprenant une combinaison d'un ou plusieurs polymères synthétiques et d'un matériau composite comprenant (i) au moins 40 % en masse de matière organique hétérogène par rapport à la masse totale du matériau composite, ladite matière organique hétérogène comprenant au moins de la cellulose, (ii) une pluralité de polymères synthétiques, et (iii) jusqu'à 15 % en masse de matière inorganique ; dans lequel ledit matériau composite comprend moins de 5 % en masse de polytéréphtalate d'éthylène (PET) par rapport à la masse totale du matériau composite ; et dans lequel ledit composite présente une empreinte carbone inférieure à environ -10 kg CO₂eq / kg telle que déterminée selon la norme ISO14040:2006, l'article manufacturé présentant une empreinte carbone inférieure à l'empreinte carbone totale desdits un ou plusieurs polymères synthétiques.

7. Article manufacturé selon la revendication 6, comprenant au moins un polymère synthétique thermoplastique.

8. Article manufacturé selon la revendication 6 ou 7, comprenant au moins 10 % de polymères synthétiques.

9. Article manufacturé selon l'une quelconque des revendications 6 à 8, présentant une empreinte carbone négative.

10. Procédé de fabrication d'un article manufacturé, le procédé comprenant l'utilisation selon l'une quelconque des revendications 1 à 5, dans lequel le procédé comprend la formation d'un mélange fondu d'un ou plusieurs polymères synthétiques et du matériau composite, et la mise en forme du mélange fondu pour lui donner la forme de l'article manufacturé.

11. Procédé selon la revendication 10, dans lequel ledit article manufacturé comprend au moins 10 % en masse desdits un ou plusieurs polymères synthétiques, de préférence au moins 30 % en masse desdits un ou plusieurs polymères synthétique, et lesdits un ou plusieurs polymères synthétiques sont de préférence des polymères vierges, tels qu'un polymère sélectionné parmi les polyoléfines et les polymères biodégradables, tels que le polypropylène (PP), le polyéthylène (PE) et l'acide polylactique (PLA).

12. Procédé selon l'une quelconque des revendications 10 et 11, dans lequel ledit article manufacturé comprend au moins 10 % en masse dudit matériau composite.

13. Utilisation selon l'une quelconque des revendications 1 à 5, comprenant la réduction des émissions de carbone liées à la fabrication d'un article manufacturé comprenant un ou plusieurs polymères synthétiques, et la fabrication dudit article manufacturé avec un mélange desdits un ou plusieurs polymères synthétiques et du matériau composite.

14. Utilisation selon la revendication 13, dans laquelle ledit mélange comprend au moins 10 % en masse d'au moins un polymère synthétique et/ou au moins 10 % en masse dudit matériau composite.
